# EUROPEAN PATENT SPECIFICATION

(11) **EP 3 402 324 B1**
(45) Date of publication and mention of the grant of the patent: **25.09.2019**
(21) Application number: 17718425.6
(22) Date of filing: 06.01.2017
(51) Int. Cl.: A01K 31/00

(54) **CONTROL DEVICE AND METHOD FOR EMPTYING POULTRY COOPS**
STEUERUNGSVORRICHTUNG UND -VERFAHREN ZUM ENTLEEREN VON GEFLÜGELSTÄLLEN
DISPOSITIF ET PROCÉDÉ DE COMMANDE POUR LE VIDAGE DE POULAILLERS

(30) Priority: 14.01.2016 NL 2016096
(43) Date of publication of application: 21.11.2018
(73) Proprietor: A.H Jansen Holding B.V., 6741 ME Lunteren (NL)
(72) Inventor: JANSEN, Albrecht Hendrik, 3772 MC Barneveld (NL)
(74) Representative: Patentwerk B.V.
(86) International application number: PCT/NL2017/050006
(87) International publication number: WO 2017/123083

(56) References cited:
- WO-A1-94/18823
- WO-A1-2015/026232
- WO-A2-2015/178871
- Jansen Poultry Equipment: "BROMAXX BROILER COLONY SYSTEM", , 1 January 2016 (2016-01-01), XP002761145, Retrieved from the Internet: URL:http://www.jpe.org/en/products/bromaxx -broiler-colony-system/bromaxx-broiler-col ony-system/ [retrieved on 2016-08-04] cited in the application

## Description

The invention relates to the emptying of poultry coops, and in particular of poultry coops placed in at least one row, wherein the bottom of each of the poultry coops comprises a removable grating and wherein a conveyor belt movable in the longitudinal direction of the row of poultry coops and suitable for transport of poultry animals is placed under the at least one row of poultry coops.

Such poultry coops, which are also known as a poultry house, are also known under the name BroMaxx and are supplied by Jansen Poultry in Barneveld. A poultry house therefore comprises a large number of poultry coops placed in a row, and extending under these poultry coops is a conveyor belt which normally, i.e. during the stay of the poultry animals, serves to discharge the manure produced by the poultry animals. The coops are provided for this purpose with a grating-like bottom on which the poultry animals stay, and the manure falls through the openings of the gratings and onto the belt. This belt runs intermittently and discharges the manure during movement. The manure is discharged toward the front side of the row of poultry coops, which is easily accessible. Arranged for this purpose under this end of the conveyor belt are gratings through which the manure dropping from the belt falls, which manure is then discharged.

It is now likewise known to use this conveyor belt for transport of the poultry animals when they have to be discharged from the poultry coops and, for instance in the case of broilers, have to be slaughtered. The conveyor belt, which is usually covered with manure, is for this purpose initially cleaned and is then driven to carry the poultry animals to a collection location. This collection location is likewise situated on the accessible front side of the series of poultry coops. Transport of manure and poultry animals thus takes place in the same direction. At the collection location the poultry animals are grabbed from the conveyor belt and placed in transport containers, such as crates, although it is likewise possible to guide the poultry animals into the transport containers without human intervention. Use is in both cases made of a secondary conveyor belt on which the poultry animals land. For loading of the poultry animals use is generally made of a device of Jansen Poultry in Barneveld which is known under the name Easyloader.

A control device for emptying a number of poultry coops and supplying the poultry animals coming from the poultry coops to a collection location according to the preamble of claim 1 is known from e.g. WO 2015/026232.

The gratings functioning as bottom of the poultry coops have to be removed in order to carry the poultry animals onto the conveyor belts. According to the prior art, this takes place manually; personnel moves along the row of poultry coops and pulls out the gratings.

The order of and the time between the pulling out of the gratings is however subject to a number of conditions; the poultry animals thus have to be prevented from landing on animals already present on the belt, the most uniform supply possible of animals to the collection location has to be ensured and the capacity of the conveyor belt may not be exceeded. It is thus difficult for the persons moving along the poultry coops to determine the poultry coop whose grating they have to remove in order to meet the above stated requirements.

In order to avoid this drawback the present invention provides a control device of the above stated type provided with a number of signal generators which are each placed at a poultry coop and are each configured to generate when activated a signal for removing the grating from the poultry coop at which the signal generator is placed, and with a control element for successively controlling the signal generators associated with a row of poultry coops to be emptied.

It is hereby possible to indicate to the personnel moving along the poultry coops the poultry coops whose bottoms have to be removed. This signal originates from the control element. This control element can be operated here by a person having an overview of the whole process, so that this person can indicate more easily which poultry coop has to be emptied. It is however likewise possible for the control element to be provided with a program which determines which poultry coop has to be emptied.

According to a first embodiment, the signal generators are configured to generate when activated a signal detectable by a person. This makes it easy to direct the personnel moving along the poultry coops.

As an alternative to this latter embodiment the gratings of the poultry coops are provided with drive means for removing the relevant grating, and each of the signal generators is configured to, when activated, set into operation the drive means of the grating of the poultry coop with which the signal generator is associated.

It is possible that the signal generators are configured to generate when activated a sound signal, although it is likewise possible that they are configured to generate a light signal, possibly in combination with a sound signal. In light of the currently present information the light signal is preferred, since the signal can be easily maintained until the grating has been removed, which could be annoying for both personnel and poultry in the case of a sound signal. It is thus attractive to configure the signal generator such that the signal stops when the grating is for instance removed or when the user has pressed a button arranged for this purpose.

Removing the bottom, which is embodied as a grating, entails the danger of the poultry animals getting their legs stuck between the front wall of the poultry coop and a bar of the grating. When personnel removes the gratings, they can detect and prevent such a situation. Since the area surrounding the poultry coops is normally dark or dimly lit, this is difficult to see for the personnel. In order to avoid this drawback the signal generators are according to a further embodiment each coupled to a light source for illuminating the poultry coop associated with the signal generator when the signal generator is activated.

In order to maintain calm among the poultry animals, it is preferred for the light source to be configured to produce a light which is difficult to see for the poultry, such as blue light.

As already described above, the invention serves, among other purposes, to avoid overloading of the drive of the conveyor belt. It is noted here that the conveyor belt and its drive are normally dimensioned to discharge the manure of the poultry animals. In order to prevent such overloading a specific embodiment ensures that the control element is configured to activate a signal generator when the number of poultry animals on the conveyor belt is equal to or smaller than a maximum number of poultry animals allowable on the conveyor belt minus the number of poultry animals in the poultry coop at which the signal generator to be activated is placed. In the case of imminent overloading the actual occurrence thereof is prevented with this measure.

In many cases the poultry coops belonging to a row are identical. A specific embodiment provides for this purpose the measure that the control element is configured to empty a series of poultry coops which each have substantially the same dimensions, and the poultry coops each comprise substantially the same number of poultry animals prior to emptying.

The control is simplified when the poultry coops are classified into groups, when the number of poultry animals in the poultry coops belonging to a group corresponds to the maximum number of poultry animals allowable on the conveyor belt and when the control element is configured to activate the signal generators associated with poultry coops belonging to a group, this in succession in the direction opposite to the direction of movement of the conveyor belt. The belt is thus prevented from being overloaded, and the poultry animals are likewise prevented from landing on each other.

In many cases a poultry house comprises more than a single row of poultry coops; a plurality of rows of poultry coops are usually positioned parallel to each other, wherein rows are placed adjacently of and above and below each other. Particularly though not exclusively when two or more parallel rows of poultry coops are placed adjacently of each other can the conveyor belts placed thereunder lead to a single collection location. In such a situation it is preferred for the control element to be configured to empty a series of poultry coops comprising at least two rows of poultry coops, for a conveyor belt to be placed under each of the rows of poultry coops, for each of the conveyor belts to lead to the same collection location and for the control device to be configured to aim for a stream of poultry animals, coming from all conveyor belts, which arrives as uniformly as possible at the collection location.

The control element preferably comprises a digital computer provided with a program for performing the functions of the control device according to at least one of the foregoing claims, and the digital computer is coupled to the signal generators. In first approximation the control element is based on poultry animals of substantially the same weight. This weight will have to be entered before the process commences. It is however also possible to take into consideration varying weights of the animals. Measuring devices will have to be placed and coupled to the control device for this purpose.

According to a further preferred embodiment, the digital computer is a portable computer such as a laptop computer, a tablet computer or a smart phone, which is coupled by means of an at least partially wireless connection to the signal generators.

Yet another embodiment provides the measure that the digital computer is coupled by a wireless connection to a fixedly arranged control circuit, which is connected to the signal generators by means of a galvanic connection.

Particularly when a control device according to the invention is retrofitted is it attractive for the galvanic connection to be guided by means of modulated carrier waves along power supply lines for light sources arranged in the poultry coops. This is because this provides the option of making use of existing electric cables.

These advantages increase when the power supply lines are divided into sections and connecting elements are placed between the sections, these elements being connected to the signal generators. This is because installation of the signal generators is greatly simplified hereby.

A fixed control circuit which is galvanically connected to the signal generators is necessary in the foregoing embodiments. A specific embodiment provides the measure that the digital computer is directly connected to the signal generators by means of a wireless connection. This obviates the necessity for a control circuit, but the signal generators have to be provided with receivers for wireless signals.

When the number of poultry animals in each of the poultry coops is equal to or does not exceed a maximum number, the control device can prevent overloading occurring due to an excessive number of poultry animals on the conveyor belt. It is assumed here that when a signal generator is activated, the poultry animals in the coop at the signal generator land on the conveyor belt and that the poultry animals leave the conveyor belt at the collection location after a period of time subject to the distance between the relevant poultry coops and the collection location. This assumption is based on an ideal situation. Since variations may occur in practice, for instance if the poultry animals begin to walk over the belt or if the relevant grating is not removed, or a different grating is removed, after activation of a signal generator, variations may result which may cause the drive means of the conveyor belt to be overloaded. In order to prevent this, a further embodiment proposes a motor load measuring element which is configured to measure the load of the at least one motor whereby the at least one conveyor belt is driven, and which is connected to the control element.

According to a further preferred embodiment, the control unit is configured to measure the motor load each time a signal generator is activated. This makes it possible to check whether the grating associated with the signal generator has indeed been removed, thus enabling a check. It is otherwise also possible to obtain this effect when the grating is provided with a contact which is opened or closed upon removal of a grating.

It is further attractive for the device to be provided with a counting device arranged at the collection location and connected to the control element. Not only is this useful for tracking the number of poultry animals delivered, it is also important for determining whether the poultry animals which have landed on the belt are indeed being carried to the collection location. This counting device can otherwise be placed on the poultry housing or on the loading device.

Another embodiment proposes that the control element is configured to determine the number of poultry animals on the conveyor belt. This makes it possible on the one hand to prevent overloading of the conveyor belt, but it also becomes easier to adjust or resume the process in the case of irregularities, for instance when the process is interrupted.

The invention relates not only to the control device, as elucidated above, but also to a control element forming part of the above described control device. This control element, which is after all provided with a digital computer, is provided with a program for performing the functions of the control device, as elucidated above. The digital computer is further coupled to the signal generators and the program present in the computer is configured to perform the above described functions.

The invention further relates to computer program configured to perform the functions as described above.

The invention likewise relates to a poultry house comprising a number of poultry coops placed in at least one row, wherein the bottom of each of the poultry coops comprises a removable grating, and a conveyor belt movable in the longitudinal direction of the row of poultry coops and suitable for transport of poultry animals is placed under the at least one row of poultry coops, characterized in that the poultry house is provided with a control device as claimed in any of the claims 1-21.

The invention likewise relates to a method for emptying a number of poultry coops and supplying the poultry animals coming from the poultry coops to a collection location, wherein the poultry coops are placed in at least one row, the bottom of each of the poultry coops comprises a removable grating and placed under the at least one row of poultry coops is a conveyor belt which is movable in the longitudinal direction of the row of poultry coops, leads to the collection location and is suitable for transport of poultry animals, wherein the method comprises the steps of successively activating by means of a control element a signal generator placed at a poultry coop so that it generates a signal, successively removing the grating from the poultry coop at which the signal-generating signal generator is placed and carrying the poultry animals, which have landed on the conveyor belt after removal of the grating, to the collection location by means of the conveyor belt.

Although it is not precluded that the poultry coops are automatically removed after activation of the signal generator by the signal originating from the signal generator, it is preferred for the gratings to be removed from the poultry coops by people after the signal has been detected.

The present invention will be elucidated hereinbelow with reference to the accompanying figures, in which:
Figure 1 is a cross-sectional view of a row of poultry coops of the type to which the invention relates;
Figure 2 is a schematic perspective view of a number of rows of poultry coops as shown in figure 1;
Figure 3 is a schematic detail view of a poultry coop as part of the rows shown in figures 1 and 2;
Figure 4A is an electrical circuit diagram for illumination of a row of poultry coops;
Figure 4B is a diagram corresponding to figure 4A which has been adjusted according to the prior art; and
Figure 5 is a diagram explaining the process according to the invention.

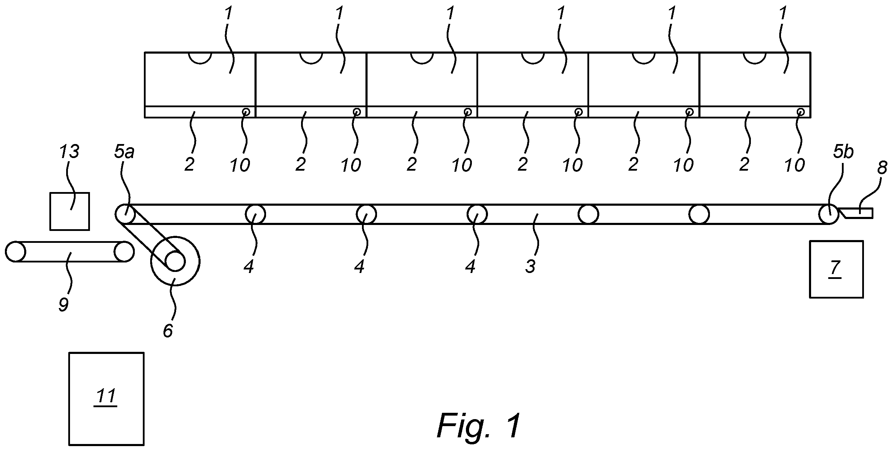

Figure 1 shows a row of poultry coops 1, preferably all having the same dimensions. Poultry coops 1 are provided on their sides and upper side with mesh walls and on their underside with a grating 2. Grating 2 is movable transversely of the longitudinal direction of the row of poultry coops 1 and can be removed from under the coop in this direction. The row of poultry coops rests on a support structure (not shown in this figure). Placed under the row of poultry coops 1 is a conveyor belt 3 which is mounted in the support structure by means of support rollers 4. At the ends conveyor belt 3 is trained around reversing rollers 5a and 5b, one of which, in the present case 5a, is connected to a drive device 6. A collecting receptacle 7 for manure is placed on the side of reversing roller 5b. This is because the poultry present in the poultry coops produces manure, which falls through gratings 2 onto conveyor belt 3. Conveyor belt 3 is therefore moved in the direction toward collecting receptacle 7 from time to time so that the manure present on conveyor belt 3 is scraped off by a scraping element 8 and comes to lie in receptacle 7. Such a row of poultry coops is known from the prior art and is marketed by Jansen Poultry B.V. from Barneveld under the brand name 'BroMaxx'.

If further forms part of the prior art to use the conveyor belt to discharge the poultry for slaughter. After disposing of the manure in order to be able to dispose of a clean conveyor belt, gratings 2 are removed one by one so that the poultry animals land on the conveyor belt and are carried to the side of reversing roller 5a. As shown in figure 1, a secondary conveyor belt 9 functioning as collection location for the poultry is here placed under reversing roller 5a. The poultry landing thereon is picked up from this secondary conveyor belt 9 and placed in crates or boxes (not shown). It is otherwise likewise possible for the secondary conveyor belt to lead directly to the crates or boxes. Up to this point the measures form part of the prior art.

The invention provides means for controlling the process of removing the gratings, both automatically and by persons. The invention provides for this purpose a control device as set forth in the claims. This control device comprises a control element and signal generators which are each placed at a poultry coop. In the embodiment shown in figure 1 the signal generators are formed by signal lamps 10 which are each placed at a coop 1. These signal lamps are controlled by a control element connectable to signal lamps 10. In this embodiment the control element takes the form of a tablet computer 11, this being connected to each of the signal lamps 10 by means of the wireless connection such as Wi-Fi, Bluetooth or another type of connection.

By successively activating the signal lamps the attention of a person moving along the poultry coops is drawn to coop 1, the grating 2 of which has to be removed. The person removes grating 2 and the poultry animals from the relevant coop land on conveyor belt 3 which discharges the poultry animals to the collection location. During removal of grating 2 there is a danger of the poultry animals getting their legs stuck between the grating and a wall of the coop. Lighting in the form of a light source 14 is therefore preferably arranged in each of the poultry coops so that the person can detect and correct such a situation. Light source 14 therefore preferably switches off after a short time so as to save energy. It is otherwise attractive for signal lamp 10 also to turn off after the grating has been removed.

It is possible in principle to place the removed gratings 2 back in the coop after the poultry from the relevant coop has landed on the conveyor belt. Since the poultry coops are generally filled with a new generation of poultry animals after the poultry animals have been discharged, the poultry coops and the gratings have to be cleaned. The gratings can of course be cleaned together with the poultry coops, but also separately. For separate cleaning the gratings can for instance be placed on the conveyor belt after discharge of the poultry, although it is also possible to collect the gratings and discharge them for cleaning in other manner.

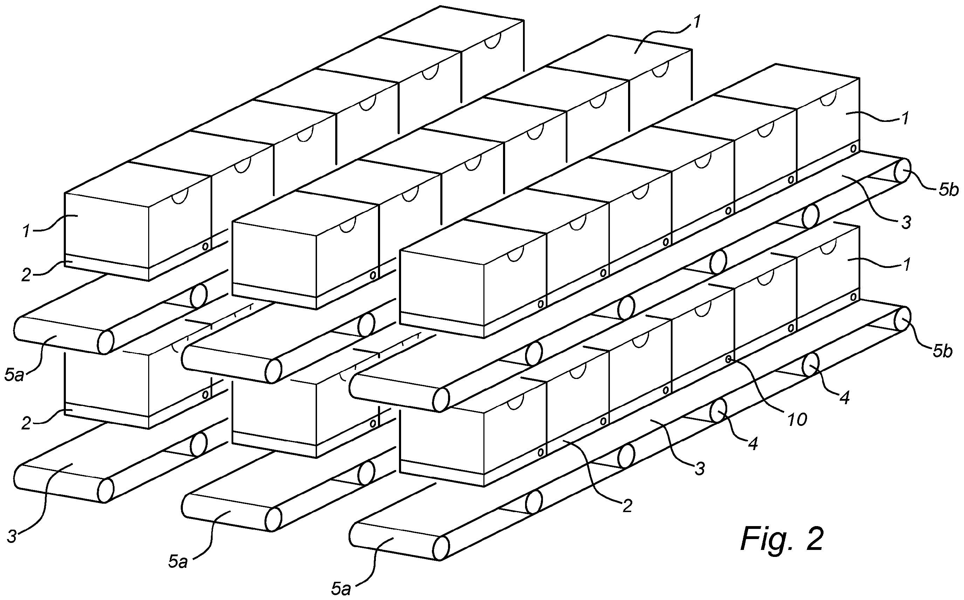

The above relates to a single row of poultry coops 1; there is usually a greater number of rows of poultry coops 1 extending parallel to each other. Such a situation is shown in figure 2. For the sake of clarity this figure shows only the rows of poultry coops 1 and the conveyor belts 3. In this figure two rows of poultry coops 1 are in each case placed one above the other, wherein a conveyor belt is arranged under each of the rows of poultry coops. It will be apparent that it is possible, also depending on the height of the building in which the poultry coops are placed, to place larger numbers of rows of poultry coops one above the other. In this embodiment three rows of poultry coops are placed adjacently of each other, although it will be apparent that, depending on the width of the building in which the poultry coops are placed, greater numbers of rows of poultry coops can be placed adjacently of each other.

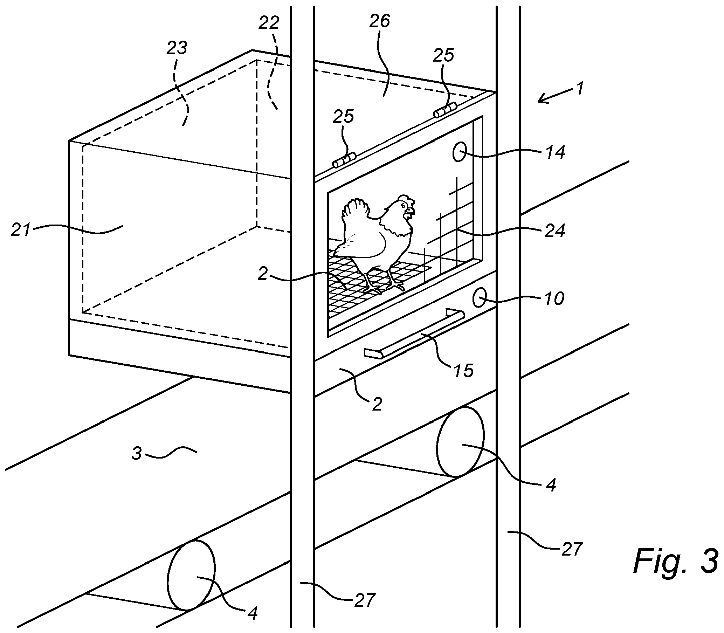

Figure 3 shows a poultry coop 1 in more detail. Coop 1 comprises two side walls 21, 22, a rear wall 23 and a front wall 24. Front wall 24 is slidable or can be tilted upward about hinges 25 in order to gain access to the interior of poultry coop 1. The front wall can for that matter also be embodied as two doors connected by means of two vertical hinges to the front edges of the side walls of the relevant poultry coop. As already described above, the bottom of the poultry coop is formed by a grating 2 which is removable on the front side of the poultry coop. In order to simplify removal the front side of grating 1 is provided with a handle 15. This drawing further shows posts 27 of the support structure, on which the rows of poultry coops 1 and the conveyor belts 3 are mounted.

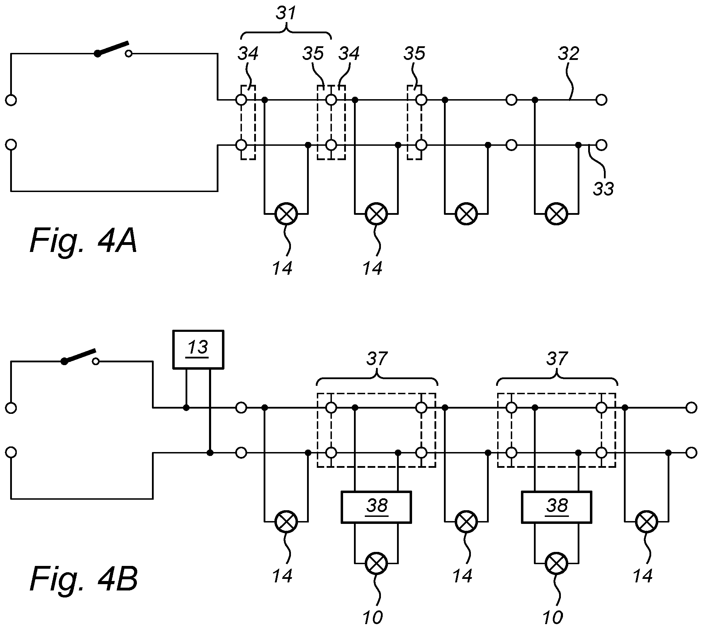

Figure 4A shows a circuit as applied for supplying power to the light sources in each of the poultry coops 1. In many cases the poultry coops take a modular form so that rows of poultry coops can be formed by connecting the modular poultry coops. The wiring and the light sources also take a modular form; each module 31 comprises two parallel wires 32, 33 which are each provided with a contact element 34, 35 at their ends. Light source 36 is connected between wires 32, 33. When connecting the modules 31 the contact elements of successive modules are mutually connected, so that the light sources are connected mutually in parallel.

The above elucidated modular circuit of the light sources enables the signal lamps to be connected in simple manner by making use of contact elements 37 to be connected between modules 31, these elements being connected by means of a receiver 38 to the relevant signal lamp. It is hereby possible to place the signal lamps in existing rows of poultry coops in simple manner. The power supply circuit of the light sources also supplies power to the signal lamps here, which is possible without problem since only one of the signal lamps is on at the time, and the power of such a lamp is small. Receivers 38 receive here the wireless signal originating from the control element, and hereby switch on the relevant signal lamp.

It is however also possible to make use of a connection between the control element and the signal lamps which makes use of a galvanic connection between a control circuit and the signal lamps and wherein the control circuit is connected by means of a wireless connection to the control element. This is the situation shown in figure 4B. In order to have both the power supply of the light sources and the signal lamps and the control of the signal lamps run via a single pair of wires, use has to be made of modulation, for which purpose the control circuit is provided with the modulator and each of the receivers is configured to demodulate the modulated signal.

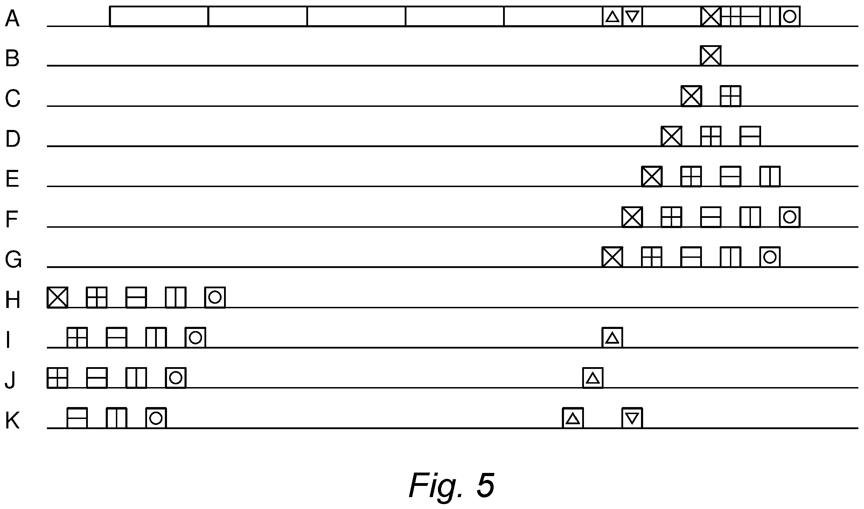

Finally, figure 5 provides an image of the process in different stages. Figure 5A shows here schematically a row of poultry coops 1 of a total of 35 poultry coops divided into 7 groups of 5 poultry coops each. Emptying of the poultry coops starts with the group lying furthest from the collection location. Of this group, the coop lying closest to the collection location is initially emptied, as shown in figure 5B. The coop subsequent thereto is then emptied, which creates the situation shown in figure 5C. This further shows that the group of animals from the coop which was emptied first have already moved along one coop. Figures 5C, 5D, 5E and 5F show the situations each time a subsequent coop has been emptied, wherein figure 5F shows the situation after emptying of the final coop of the group. The groups of animals which have thus landed on the conveyor belt move on the conveyor belt toward the collection location until the first group of animals arrives at the collection location. The situation is shown in figure 5H. After the first group of animals has been removed from the conveyor belt at the collection location the first coop of the subsequent group of poultry coops is emptied. This situation is shown in figure 5I. Because of the intermediate spaces between the groups of animals on the belt it will be necessary to wait for a period of time until the next group of animals has been removed from the belt and space has been created for emptying the second poultry coop of the second group of poultry coops. The situation during this interval is shown in figure 5J. Finally, figure 5K shows the situation after emptying of the second poultry coop.

It will be apparent that this figure shows only an example of a process for emptying the poultry coops; numerous variations are possible. In the case of a collection location where several conveyor belts converge it is thus advantageous to vary the intervals between the groups of poultry animals on the conveyor belts, so that the most continuous possible stream of poultry animals arrives at the collection location in each case. Since the intermediate spaces between the groups of animals in successive emptying of the coops from the front side result in intervals of increasing duration between the groups of animals and in successive emptying of the coops from the rear side in intervals of decreasing duration, it is attractive for the coops above one of the conveyor belts to be emptied successively from the front side and the poultry coops above the other conveyor belt from the rear side.

It will be apparent that the measures described in different embodiments can be combined with each other so that the scope of the invention is not limited to the described embodiments but is defined only by the claims.

## Claims

1. Control device for controlling the process of emptying a number of poultry coops (1) and of supplying the poultry animals coming from the poultry coops (1) to a collection location, wherein
- the poultry coops (1) are placed in at least one row;
- the bottom of each of the poultry coops (1) comprises a removable grating (2); and
- placed under the at least one row of poultry coops (1) is a conveyor belt (3) which is movable in the longitudinal direction of the row of poultry coops (1), leads to the collection location and is suitable for transport of poultry animals,
**characterized in that** the control device comprises:
- a number of signal generators (10) which are each placed at a poultry coop (1) and are each configured to generate when activated a signal for removing the grating (2) from the poultry coop (1) at which the signal generator (10) is placed; and
- a control element (11) for successively controlling the signal generators (10) associated with a row of poultry coops (1) to be emptied.

2. Control device as claimed in claim 1, **characterized in that** the control device is configured to control the emptying process of poultry coops (1) which are provided with drive means for removing the relevant grating (2) and that each of the signal generators (10) is configured to, when activated, set into operation the drive means of the grating (2) of the poultry coop (1) with which the signal generator (10) is associated.

3. Control device as claimed in claim 1 or 2, **characterized in that** the signal generators (10) are configured to generate when activated a signal detectable by a person, wherein preferably the signal generators (10) are configured to generate a sound signal when activated, and/or wherein the signal generators (10) are configured to generate a light signal when activated, wherein preferably the signal generators (10) are each coupled to a light source (14) for illuminating the poultry coop associated with the signal generator (10) when the signal generator is activated, and wherein preferably the light source (14) is configured to produce a light which is difficult to see for the poultry, such as blue light.

4. Control device as claimed in any of the foregoing claims, **characterized in that** the control element (11) is configured to activate a signal generator (10) when the number of poultry animals on the conveyor belt (3) is equal to or smaller than a maximum number of poultry animals allowable on the conveyor belt (3) minus the number of poultry animals in the poultry coop (1) at which the signal generator (10) to be activated is placed.

5. Control device as claimed in claim 4, **characterized in that** the control element (11) is configured to empty a series of poultry coops (1) which each have substantially the same dimensions and the poultry coops (1) each comprise substantially the same number of poultry animals prior to emptying, wherein preferably the control device is configured to control the emptying process of a number of poultry coops which have been classified into groups,
- that, prior to the emptying process, the number of poultry animals in the poultry coops (1) belonging to a group corresponds to the maximum number of poultry animals allowable on the conveyor belt (3), and
- that the control element (11) is configured to activate the signal generators (10) associated with poultry coops (1) belonging to a group, this in succession in the direction opposite to the direction of movement of the conveyor belt (3).

6. Control device as claimed in any of the foregoing claims, **characterized in that**
- the control element (11) is configured to empty a series of poultry coops (1) comprising at least two rows of poultry coops (1);
- a conveyor belt (3) is placed under each of the rows of poultry coops (1);
- each of the conveyor belts (3) leads to the same collection location; and
- the control device is configured to aim for a stream of poultry animals, coming from all conveyor belts (3) together, which arrives as uniformly as possible at the collection location.

7. Control device as claimed in any of the foregoing claims, **characterized in that** the control element (11) comprises a digital computer (11) provided with a program for performing the functions of the control device as claimed in at least one of the foregoing claims and that the digital computer (11) is coupled to the signal generators (10).

8. Control device as claimed in claim 7, **characterized in that** the digital computer (11) is a portable computer such as a laptop computer, a tablet computer (11) or a smart phone, which is coupled by means of an at least partially wireless connection to the signal generators (10).

9. Control device as claimed in claim 7 or 8, **characterized in that** the digital computer (11) is coupled by a wireless connection to a fixedly arranged control circuit, which is connected to the signal generators (10) by means of a galvanic connection wherein preferably the galvanic connection extends by means of modulated carrier waves along power supply lines for light sources arranged in the poultry coops (1) and wherein the power supply lines are optionally divided into sections and that connecting elements which are connected to the signal generators (10) are placed between the sections.

10. Control device as claimed in claim 8, **characterized in that** the digital computer (11) is directly connected to the signal generators (10) by means of a wireless connection.

11. Control device as claimed in any of the foregoing claims, **characterized by** a motor load measuring element which is configured to measure the load of the at least one motor (6) whereby the at least one conveyor belt (3) is driven and which is connected to the control element (11) wherein preferably the control unit is configured to measure the motor load each time a signal generator (10) is activated and/or **characterized by** a counting device which is arranged at the collection location and is connected to the control element (11), and preferably **characterized in that** the control element (11) is configured to determine the number of poultry animals on the conveyor belt (3).

12. Control element forming part of the control device as claimed in claim 7, **characterized in that** the program present in the computer (11) is configured to perform the functions as described in claims 1-6 and 8-11.

13. Computer program configured to perform the functions as described in claims 1-6 and 8-11.

14. Poultry house comprising a number of poultry coops (1) placed in at least one row, wherein the bottom of each of the poultry coops comprises a removable grating (2), and a conveyor belt (3) movable in the longitudinal direction of the row of poultry coops (1) and suitable for transport of poultry animals is placed under the at least one row of poultry coops (1), **characterized in that** the control device is provided with a control device as claimed in any of the claims 1-11.

15. Method for emptying a number of poultry coops (1) and supplying the poultry animals coming from the poultry coops (1) to a collection location, wherein
- the poultry coops (1) are placed in at least one row,
- the bottom of each of the poultry coops (1) comprises a removable grating (2); and
- placed under the at least one row of poultry coops (1) is a conveyor belt (3) which is movable in the longitudinal direction of the row of poultry coops (1), leads to the collection location and is suitable for transport of poultry animals,
**characterized in that** the method comprises the following steps of:
- successively activating by means of a control element (11) a signal generator (10) placed at a poultry coop (1) so that it generates a signal;
- successively removing the grating (2) from the poultry coop (1) at which the signal-generating signal generator (10) is placed; and
- carrying the poultry animals, which have landed on the conveyor belt (3) after removal of the grating (2), to the collection location by means of the conveyor belt (3), wherein preferably the gratings (2) are removed from the poultry coops (1) by people after the signal has been detected.

## Patentansprüche

1. Steuervorrichtung zum Steuern des Vorgangs des Leerens mehrerer Geflügelställe (1) und des Beförderns der Geflügeltiere, die aus den Geflügelställen (1) kommen, zu einem Sammelort, wobei
- die Geflügelställe (1) in wenigstens einer Reihe angeordnet sind;
- der Boden jedes der Geflügelställe (1) einen entfernbaren Gitterrost (2) umfasst; und
- unter der wenigstens einen Reihe von Geflügelställen (1) ein Förderband (3) angeordnet ist, das in der Längsrichtung der Reihe von Geflügelställen (1) beweglich ist, zu dem Sammelort führt und für die Beförderung von Geflügeltieren geeignet ist,
**dadurch gekennzeichnet, dass** die Steuervorrichtung umfasst:
- mehrere Signalgeber (10), die jeweils an einem Geflügelstall (1) angeordnet sind und jeweils dafür gestaltet sind, bei Aktivierung ein Signal zum Entfernen des Gitterrosts (2) von dem Geflügelstall, an dem der Signalgeber (10) angeordnet ist, zu erzeugen; und
- ein Steuerelement (11) zum aufeinanderfolgenden Steuern der Signalgeber (10), die mit einer Reihe von Geflügelställen (1), die geleert werden sollen, verbunden sind.

2. Steuervorrichtung gemäß Anspruch 1, **dadurch gekennzeichnet, dass** die Steuervorrichtung dafür gestaltet ist, den Vorgang des Leerens von Geflügelställen (10) zu steuern, die mit Antriebseinrichtungen zum Entfernen des entsprechenden Gitterrosts (2) versehen sind, und dass jeder der Signalgeber (10) dafür gestaltet ist, bei Aktivierung die Antriebseinrichtung des Gitterrosts (2) des Geflügelstalls (1), mit dem der Signalgeber (10) verbunden ist, in Betrieb zu setzen.

3. Steuervorrichtung gemäß Anspruch 1 oder 2, **dadurch gekennzeichnet, dass** die Signalgeber (10) dafür gestaltet sind, bei Aktivierung ein Signal zu erzeugen, das von einer Person wahrnehmbar ist, wobei die Signalgeber (10) vorzugsweise dafür gestaltet sind, bei Aktivierung ein Tonsignal zu erzeugen, und/oder wobei die Signalgeber (10) dafür gestaltet sind, bei Aktivierung ein Lichtsignal zu erzeugen, wobei die Signalgeber (10) vorzugsweise jeweils an eine Lichtquelle (14) gekoppelt sind, um bei Aktivierung des Signalgebers den mit dem Signalgeber (10) verbundenen Geflügelstall zu beleuchten, und wobei die Lichtquelle (14) vorzugsweise dafür gestaltet ist, ein Licht zu erzeugen, das für das Geflügel schwer zu sehen ist, wie z. B. blaues Licht.

4. Steuervorrichtung gemäß einem der vorstehenden Ansprüche, **dadurch gekennzeichnet, dass** das Steuerelement (11) dafür gestaltet ist, einen Signalgeber (10) zu aktivieren, wenn die Zahl von Geflügeltieren auf dem Förderband (3) gleich einer oder kleiner als eine Höchstzahl von auf dem Förderband (3) zulässigen Geflügeltieren minus der Zahl der Geflügeltiere in dem Geflügelstall (1), an dem der zu aktivierende Signalgeber (10) angeordnet ist, ist.

5. Steuervorrichtung gemäß Anspruch 4, **dadurch gekennzeichnet, dass** das Steuerelement (11) dafür gestaltet ist, eine Reihe von Geflügelställen (1) zu leeren, die jeweils im Wesentlichen die gleiche Abmessung aufweisen, und wobei die Geflügelställe (1) jeweils vor dem Leeren im Wesentlichen die gleiche Zahl von Geflügeltieren enthalten, wobei die Steuereinheit vorzugsweise dafür gestaltet ist, den Vorgang des Leerens mehrerer Geflügelställe, die in Gruppen eingeteilt worden sind, zu steuern
- dass vor dem Vorgang des Leerens die Zahl von Geflügeltieren in den Geflügelställen (1), die zu einer Gruppe gehören, der Höchstzahl von Geflügeltieren entspricht, die auf dem Förderband (3) zulässig sind, und
- dass das Steuerelement (11) dafür gestaltet ist, die Signalgeber (10) zu aktivieren, die mit zu einer Gruppe gehörenden Geflügelställen (1) verbunden sind, wobei dies nacheinander in der Richtung erfolgt, die der Bewegungsrichtung des Förderbands (3) entgegengesetzt ist.

6. Steuervorrichtung gemäß einem der vorstehenden Ansprüche, **dadurch gekennzeichnet, dass**
- dass das Steuerelement (11) dafür gestaltet ist, eine Gruppe von Geflügelställen (1) zu leeren, die wenigstens zwei Reihen von Geflügelställen (1) umfasst;
- unter jeder der Reihen von Geflügelställen (1) ein Förderband (3) angeordnet ist;
- jedes der Förderbänder (3) zu dem gleichen Sammelort führt; und
- die Steuervorrichtung dafür gestaltet ist, einen Strom von Geflügeltieren, die von allen Förderbändern (3) zusammenkommen, anzustreben, der so gleichmäßig wie möglich an dem Sammelort ankommt.

7. Steuervorrichtung gemäß einem der vorstehenden Ansprüche, **dadurch gekennzeichnet, dass** das Steuerelement (11) einen Digitalcomputer (11) umfasst, der mit einem Programm zum Durchführen der Funktionen der Steuervorrichtung gemäß wenigstens einem der vorstehenden Ansprüche ausgestattet ist, und dass der Digitalcomputer an die Signalgeber (10) gekoppelt ist.

8. Steuervorrichtung gemäß Anspruch 7, **dadurch gekennzeichnet, dass** der Digitalcomputer (11) ein tragbarer Computer ist, wie z. B. ein Laptop-Computer, ein Tablet-Computer (11) oder ein Smartphone, der mithilfe einer wenigstens teilweise drahtlosen Verbindung an die Signalgeber (10) gekoppelt ist.

9. Steuervorrichtung gemäß Anspruch 7 oder 8, **dadurch gekennzeichnet, dass** der Digitalcomputer (11) durch eine drahtlose Verbindung an eine feststehend angeordnete Steuerschaltung gekoppelt ist, die mithilfe einer galvanischen Verbindung an die Signalgeber (10) gekoppelt ist, wobei die galvanische Verbindung vorzugsweise mithilfe modulierter Trägerwellen entlang von Stromversorgungsleitungen für Lichtquellen, die in den Geflügelställen (1) angeordnet sind, verläuft, und wobei die Stromversorgungsleitungen gegebenenfalls in Abschnitte aufgeteilt sind und zwischen den Abschnitten Verbindungselemente angeordnet sind, die mit den Signalgebern (10) verbunden sind.

10. Steuervorrichtung gemäß Anspruch 8, **dadurch gekennzeichnet, dass** der Digitalcomputer (11) mithilfe einer drahtlosen Verbindung direkt mit den Signalgeneratoren (10) verbunden ist.

11. Steuervorrichtung gemäß einem der vorstehenden Ansprüche, **gekennzeichnet durch** ein Motorlast-Messelement, das dafür gestaltet ist, die Last des wenigstens einen Motors (6) zu messen, **durch** den das wenigstens eine Förderband (3) angetrieben wird, und das mit dem Steuerelement (11) verbunden ist, wobei die Steuereinheit vorzugsweise dafür gestaltet ist, die Motorlast jedes Mal zu messen, wenn ein Signalgeber (10) aktiviert wird, und/oder **gekennzeichnet durch** eine Zählvorrichtung, die an dem Sammelort angeordnet ist und mit dem Steuerelement (11) verbunden ist, und vorzugsweise **dadurch** gekennzeichnet, dass das Steuerelement (11) dafür gestaltet ist, die Zahl von Geflügeltieren auf dem Förderband (3) zu bestimmen.

12. Steuerelement, das einen Teil der Steuervorrichtung gemäß Anspruch 7 bildet, **dadurch gekennzeichnet, dass** das in dem Computer vorhandene Programm dafür gestaltet ist, die in den Ansprüchen 1-6 und 8-11 beschriebenen Funktionen durchzuführen.

13. Computerprogramm, gestaltet zum Durchführen der in den Ansprüchen 1-6 und 8-11 beschriebenen Funktionen.

14. Geflügelhaus, umfassend mehrere Geflügelställe (1), die in wenigstens einer Reihe angeordnet sind, wobei der Boden jedes der Geflügelställe einen entfernbaren Gitterrost (2) umfasst, und ein Förderband (3), das in der Längsrichtung der Reihe von Geflügelställen (1) beweglich ist und für die Beförderung von Geflügeltieren geeignet ist, unter der wenigstens einen Reihe von Geflügelställen (1) angeordnet ist, **dadurch gekennzeichnet, dass** die Steuervorrichtung mit einer Steuervorrichtung gemäß einem der Ansprüche 1-11 versehen ist.

15. Verfahren zum Leeren mehrerer Geflügelställe (1) und Befördern der Geflügeltiere, die aus den Geflügelställen (1) kommen, zu einem Sammelort, wobei
- die Geflügelställe (1) in wenigstens einer Reihe angeordnet sind;
- der Boden jedes der Geflügelställe (1) einen entfernbaren Gitterrost (2) umfasst; und
- unter der wenigstens einen Reihe von Geflügelställen (1) ein Förderband (3) angeordnet ist, das in der Längsrichtung der Reihe von Geflügelställen (1) beweglich ist, zu dem Sammelort führt und für die Beförderung von Geflügeltieren geeignet ist,
**dadurch gekennzeichnet, dass** das Verfahren folgende Schritte umfasst:
- mithilfe eines Steuerelements (11) aufeinanderfolgendes Aktivieren eines an einem Geflügelstall (1) angeordnet Signalgebers (10), so dass er ein Signal erzeugt;
- aufeinanderfolgendes Entfernen des Gitterrosts (2) von dem Geflügelstall (19, an dem der signalerzeugende Signalgeber (10) angeordnet ist; und
- Tragen der Geflügeltiere, die nach dem Entfernen des Gitterrosts (2) auf dem Förderband (3) gelandet sind, zu dem Sammelort mithilfe des Förderbands (3), wobei die Gitterroste (2) vorzugsweise von Personen von den Geflügelställen (1) entfernt werden, nachdem das Signal wahrgenommen worden ist.

## Revendications

1. Dispositif de commande pour commander le processus de vidage d'un certain nombre de poulaillers (1) et de fourniture des volailles provenant des poulaillers (1) vers un lieu de collecte, dans lequel
- les poulaillers (1) sont placés dans au moins une rangée ;
- le fond de chacun des poulaillers (1) comprend un grillage amovible (2) ; et
- un tapis roulant (3) est placé sous l'au moins une rangée de poulaillers (1), et peut se déplacer dans le sens longitudinal de la rangée de poulaillers (1), conduit au lieu de collecte et convient au transport des volailles,
**caractérisé en ce que** le dispositif de commande comprend :
- un certain nombre de générateurs de signaux (10) placés chacun au niveau d'un poulailler (1) et configurés chacun pour générer, lorsqu'ils sont activés, un signal permettant de retirer le grillage (2) du poulailler (1) au niveau duquel le générateur de signal (10) est placé ; et
- un élément de commande (11) pour commander successivement les générateurs de signaux (10) associés à une rangée de poulaillers (1) à vider.

2. Dispositif de commande selon la revendication 1, **caractérisé en ce que** le dispositif de commande est configuré pour commander le processus de vidage des poulaillers (1) qui sont dotés de moyens de commande pour retirer le grillage concerné (2) et **en ce que** chacun des générateurs de signaux (10) est configuré pour, lorsqu'il est activé, mettre en service les moyens de commande du grillage (2) du poulailler (1) auquel le générateur de signal (10) est associé.

3. Dispositif de commande selon la revendication 1 ou 2, **caractérisé en ce que** les générateurs de signaux (10) sont configurés pour générer, lorsqu'ils sont activés, un signal détectable par une personne, dans lequel, de préférence, les générateurs de signaux (10) sont configurés pour générer un signal sonore lorsqu'ils sont activés, et/ou dans lequel les générateurs de signaux (10) sont configurés pour générer un signal lumineux lorsqu'ils sont activés, dans lequel, de préférence, les générateurs de signaux (10) sont chacun couplés à une source de lumière (14) pour éclairer le poulailler associé au générateur de signal (10) lorsque le générateur de signal est activé, et dans lequel, de préférence, la source de lumière (14) est configurée pour produire une lumière difficile à voir de la part des volailles, par exemple une lumière bleue.

4. Dispositif de commande selon l'une quelconque des revendications précédentes, **caractérisé en ce que** l'élément de commande (11) est configuré pour activer un générateur de signal (10) lorsque le nombre de volailles sur le tapis roulant (3) est égal ou inférieur à un nombre maximal de volailles admissible sur le tapis roulant (3) moins le nombre de volailles dans le poulailler (1) au niveau duquel le générateur de signal (10) à activer est placé.

5. Dispositif de commande selon la revendication 4, **caractérisé en ce que** l'élément de commande (11) est configuré pour vider une série de poulaillers (1) qui ont chacun sensiblement les mêmes dimensions et **en ce que** les poulaillers (1) comprennent chacun sensiblement le même nombre de volailles avant de les vider, dans lequel, de préférence, le dispositif de commande est configuré pour commander le processus de vidage d'un certain nombre de poulaillers qui ont été classés en groupes,
- **en ce que**, avant le processus de vidage, le nombre de volailles dans les poulaillers (1) appartenant à un groupe correspond au nombre maximal de volailles admissible sur le tapis roulant (3), et
- **en ce que** l'élément de commande (11) est configuré pour activer les générateurs de signaux (10) associés à des poulaillers (1) appartenant à un groupe, ceci en succession dans le sens opposé au sens de déplacement du tapis roulant (3).

6. Dispositif de commande selon l'une quelconque des revendications précédentes, **caractérisé en ce que**
- l'élément de commande (11) est configuré pour vider une série de poulaillers (1) comprenant au moins deux rangées de poulaillers (1) ;
- un tapis roulant (3) est placé sous chacune des rangées de poulaillers (1) ;
- chacun des tapis roulants (3) conduit au même emplacement de collecte ; et
- le dispositif de commande est configuré pour traiter un flux de volailles provenant de tous les tapis roulants (3) ensemble, qui arrive aussi uniformément que possible au lieu de collecte.

7. Dispositif de commande selon l'une quelconque des revendications précédentes, **caractérisé en ce que** l'élément de commande (11) comprend un ordinateur numérique (11) doté d'un programme pour exécuter les fonctions du dispositif de commande selon l'une au moins des revendications précédentes et **en ce que** l'ordinateur numérique (11) est couplé aux générateurs de signaux (10).

8. Dispositif de commande selon la revendication 7, **caractérisé en ce que** l'ordinateur numérique (11) est un ordinateur portable tel qu'un ordinateur portatif, une tablette (11) ou un smartphone, qui est couplé au moyen d'une connexion au moins partiellement sans fil aux générateurs de signaux (10).

9. Dispositif de commande selon la revendication 7 ou 8, **caractérisé en ce que** l'ordinateur numérique (11) est couplé par une connexion sans fil à un circuit de commande agencé de manière fixe, qui est connecté aux générateurs de signaux (10) au moyen d'une connexion galvanique dans lequel, de préférence, la connexion galvanique s'étend au moyen d'ondes porteuses modulées le long de lignes d'alimentation électrique pour alimenter des sources lumineuses disposées dans les poulaillers (1) et dans lequel les lignes d'alimentation électrique sont éventuellement divisées en sections et **en ce que** des éléments de connexion qui sont connectés aux générateurs de signaux (10) sont placés entre les sections.

10. Dispositif de commande selon la revendication 8, **caractérisé en ce que** l'ordinateur numérique (11) est directement connecté aux générateurs de signaux (10) au moyen d'une connexion sans fil.

11. Dispositif de commande selon l'une quelconque des revendications précédentes, **caractérisé par** un élément de mesure de la charge du moteur qui est conçu pour mesurer la charge du ou des moteurs (6) moyennant quoi le ou les tapis roulants (3) sont entraînés et qui est connecté à l'élément de commande (11) dans lequel, de préférence, l'unité de commande est configurée pour mesurer la charge du moteur chaque fois qu'un générateur de signal (10) est activé et/ou **caractérisé par** un dispositif de comptage qui est agencé au niveau de l'emplacement de collecte et est connecté à l'élément de commande (11), et de préférence **caractérisé en ce que** l'élément de commande (11) est configuré pour déterminer le nombre de volailles sur le tapis roulant (3).

12. Élément de commande faisant partie du dispositif de commande selon la revendication 7, **caractérisé en ce que** le programme présent dans l'ordinateur (11) est configuré pour exécuter les fonctions décrites dans les revendications 1 à 6 et 8 à 11.

13. Programme informatique configuré pour exécuter les fonctions décrites dans les revendications 1 à 6 et 8 à 11.

14. Habitat pour volailles comprenant un certain nombre de poulaillers (1) placés en au moins une rangée, dans lequel le fond de chacun des poulaillers comprend un grillage amovible (2) et un tapis roulant (3) mobile dans le sens longitudinal de la rangée de poulaillers (1) et adapté au transport de volailles est placé sous la ou les rangées de poulaillers (1), **caractérisé en ce que** le dispositif de commande est pourvu d'un dispositif de commande selon l'une quelconque des revendications 1 à 11.

15. Procédé pour vider un certain nombre de poulaillers (1) et fournir les volailles provenant des poulaillers (1) à un lieu de collecte, dans lequel
- les poulaillers (1) sont placés dans au moins une rangée,
- le fond de chacun des poulaillers (1) comprend un grillage amovible (2) ; et
- un tapis roulant (3) est placé sous l'au moins une rangée de poulaillers (1), et peut se déplacer dans le sens longitudinal de la rangée de poulaillers (1), conduit au lieu de collecte et convient au transport des volailles,
**caractérisé en ce que** le procédé comprenant les étapes suivantes, consistant à :
- activer successivement au moyen d'un élément de commande (11) un générateur de signal (10) placé au niveau d'un poulailler (1) afin qu'il génère un signal ;
- retirer successivement le grillage (2) du poulailler (1) au niveau duquel le générateur de signal (10) qui génère le signal est placé ; et
- transporter les volailles qui ont atterri sur le tapis roulant (3) après le retrait du grillage (2) vers le lieu de collecte au moyen du tapis roulant (3), dans lequel, après que le signal a été détecté, les grillages (2) sont de préférence retirés des poulaillers (1) par des personnes.
